# EUROPÄISCHE PATENTANMELDUNG

(11) **EP 2 236 267 A1**
(43) Veröffentlichungstag der Anmeldung: **06.10.2010**
(21) Anmeldenummer: 10156055.5
(22) Anmeldetag: 10.03.2010
(51) Int. Cl.: B29C 49/42, B29C 49/04

(54) **Verfahren und Vorrichtung zur Herstellung eines Kunststoffbauteils sowie Kunststoffbauteil**

(30) Priorität: 30.03.2009 DE 102009001968
(71) Anmelder: Geiger Automotive GmbH, 82418 Murnau (DE)
(72) Erfinder: Geiger, Albert, 82467 Garmisch-Partenkirchen (DE)
(74) Vertreter: Lermer, Christoph

(57) **Zusammenfassung**

Ein Formwerkzeug (1) weist zwei Formhälften (1a und 1b) auf, deren Wandbereiche (10a bzw. 10b) eine Kavität (2) definieren. In der Formhälfte (1a) sind seitlich zylindrische Vertiefungen (11a und 12a) vorgesehen, um ein hohles Bauteil mit seitlich sich erstreckenden Stutzen herzustellen. Wie durch die Pfeile (C1) und die Pfeile (C2) in der ersten bzw. in der zweiten Formhälfte (1a bzw. 1b) angedeutet, wird ein extrudierter Vorformling (4), der durch die Kavität (2) hindurch geführt worden ist, über Öffnungen (5) an geeigneten Stellen der Innenwände (10a,10b) der Werkzeugs (1) zu den Wandbereichen (10a und 10b) gesaugt, um sich an diese anzulegen. Wie dargestellt, können Öffnungen auch in den Vertiefungen (11a,12a) vorgesehen sein. Dadurch wird der extrudierte Schlauch (4) auch in die Vertiefungen (11a und 12a) gesaugt, um jeweils einen Stutzen bzw. eine seitliche Verformung im hergestellten Bauteil auszubilden. Mit Hilfe der Erfindung können mit hoher Qualität und Präzision Geometrien realisiert werden, die im herkömmlichen Saugblasverfahren nicht oder nur schwer hergestellt werden konnten.
Auch ein Verfahren zur Herstellung eines Kunststoffbauteils sowie ein Kunststoffbauteil werden beschrieben.

## Beschreibung

### TECHNISCHES GEBIET

Die vorliegende Erfindung betrifft ein Verfahren zur Herstellung eines Kunststoffbauteils mit einem Hohlraum, umfassend die Schritte: a) Bereitstellen eines Formwerkzeugs mit einer Kavität; und b) Einbringen eines extrudierten Vorformlings in die Kavität. Außerdem betrifft die Erfindung eine Vorrichtung zur Herstellung eines Kunststoffbauteils, umfassend ein Formwerkzeug mit einer Formkavität, die von einer Innenwand begrenzt wird, zum Einbringen eines hohlen, extrudierten Vorformlings in die Kavität. Zudem betrifft die Erfindung ein Kunststoffbauteil, insbesondere hergestellt nach einem Verfahren wie oben beschrieben.

### STAND DER TECHNIK

Bei der Herstellung von Hohlkörpern aus thermoplastischen Kunststoffen werden unterschiedliche Verfahren eingesetzt. Eines dieser Verfahren ist ein Extrusionsblasformverfahren, bei dem ein Vorformling beispielsweise in Form eines Schlauchs extrudiert und in die Kavität eines Formwerkzeugs eingeführt wird. Ein Ende des extrudierten Schlauchs wird durch das Formwerkzeug gesaugt, bis es am anderen Ende der Kavität angelangt ist. Anschließend wird die Kavität des Formwerkzeugs verschlossen und Druckluft in den inneren Bereich des Vorformlings eingeleitet, so dass dieser aufgeblasen wird, sich an die Innenwand der Kavität anlegt und so deren Kontur annimmt. Nach einer Abkühlphase wird das Formwerkzeug geöffnet und das fertige Kunststoffbauteil entformt. Ein entsprechendes Verfahren ist beispielsweise aus der Druckschrift EP 1 108 522 A1 bekannt.

Schwierig ist insbesondere das Durchführen des extrudierten Schlauchs, wenn die Kavität nicht gerade verläuft, sondern Kurven und Biegungen aufweist. In der Regel wird daher die Innenwand der Kavität beschichtet, um ein Anhaften des extrudierten Schlauchs an der Wand der Kavität möglichst zu verhindern.

Auch wenn sich das Saugblasverfahren bei der Herstellung einer Vielzahl von Formen bewährt hat, so ist doch eine Vielzahl von Geometrien nicht oder nicht in ausreichender Qualität und Zuverlässigkeit zu fertigen.

### AUFGABE DER ERFINDUNG

Ausgehend davon besteht die Aufgabe der vorliegenden Erfindung darin, ein Verfahren und eine Vorrichtung bereitzustellen, die eine einfachere und verbesserte Herstellung von Kunststoffbauteilen mit Geometrien erlauben, die in Saugblasverfahren nicht oder nur schwierig herstellbar sind. Außerdem sollen Kunststoffbauteile mit speziellen, im Saugblasverfahren nur schwierig herstellbaren Geometrien, bereitgestellt werden.

### TECHNISCHE LÖSUNG

Diese Aufgabe wird gelöst durch ein Verfahren zur Herstellung eines Kunststoffbauteils gemäß dem Anspruch 1, eine Vorrichtung zur Herstellung eines Kunststoffbauteils gemäß dem Anspruch 8, und ein Kunststoffbauteils gemäß dem Anspruch 14. Vorteilhafte Ausführungen der Erfindung ergeben sich aus den Merkmalen der abhängigen Ansprüche.

Das erfindungsgemäße Verfahren zur Herstellung eines Kunststoffbauteils, insbesondere eines Kunststoffbauteils mit einem Hohlraum, umfasst die Schritte: a) Bereitstellen eines Formwerkzeugs mit einer Kavität; b) Einbringen eines Vorformlings in die Kavität; und c) Ansaugen der Außenwand des Vorformlings an die Innenwand der Kavität durch Erzeugen eines Unterdrucks zwischen der Außenwand des Vorformlings und der Innenwand der Kavität.

Das Verfahren ist zur Herstellung aller möglichen Kunststoffbauteile geeignet, insbesondere zur Herstellung von Verpackungsartikeln, Behältern, beispielsweise im KFZ-Bereich, Rohren, Schläuchen, etc. Besondere Vorteile bietet das Verfahren bei der Herstellung von Kunststoffbauteilen mit Geometrien, die mit herkömmlichen Verfahren, wie üblichen Saugblasverfahren, nicht oder nur schwierig herstellbar sind. Dies können beispielsweise Bauteile sein, die einen hohlen Grundkörper und sich davon seitlich, d. h. quer zur Hauptachse, erstreckende Abschnitte aufweisen. So können mittels des erfindungsgemäßen Verfahrens beispielsweise Behälter mit Einfüllstutzen in einstückiger, d.h. einteiliger, Ausführung erzeugt werden. Mit herkömmlichen Verfahren sind der Herstellung derartiger Bauteile Grenzen gesetzt. Daher werden diese häufig aus zwei Komponenten, beispielsweise dem Behälter und einem Stutzen, zusammengesetzt. Dies bedeutet zusätzlichen Zeit- und Kostenaufwand. Ähnliche Probleme werden durch die vorliegende Erfindung für eine Vielzahl von Geometrien gelöst. Das Verfahren kann insbesondere auch zur Herstellung gekrümmter Bauteile eingesetzt werden. Die von einer Innenwand begrenzte Kavität weist eine der gewünschten Außenkontur des Bauteils komplementäre Struktur bzw. Kontur auf.

Zu Beginn des Verfahrens wird ein vorzugsweise extrudierter, hohler Vorformling, der etwa die Form eines hohlen Schlauchs aufweist (z.B. ein Schmelzschlauch), in die Kavität eingebracht. das freie Ende des Vorformlings wird vom Extruder, der an einem Ende der Kavität angeordnet ist, zum anderen Ende der Kavität hindurch geführt. Dieses Durchführen kann durch verschiedene Maßnahmen unterstützt werden. So können bei gekrümmten Kavitäten Kontakte mit der Innenwand der Kavität durch das gezielte Einblasen von Pressluft, beispielsweise durch in der Innenwand der Kavität ausgebildete Öffnungen in den gekrümmten Bereichen der Kavität, verhindert werden. Der Schlauch wird durch die Pressluft in einem definierten Abstand von der Innenwand der Kavität gehalten. Außerdem kann die Innenwand der Kavität beschichtet sein, um ein Anhaften des Vorformlings zu verhindern.

Anschließend wird der Vorformling an den Enden der Kavität abgeschnitten. Erfindungsgemäß wird danach der Vorformling an die Innenwand der Kavität angelegt bzw. angepresst, indem ein Unterdruck bzw. ein Vakuum zwischen der Außenwand des Schmelzschlauchs und der Innenwand der Kavität erzeugt wird. Der Vorformling expandiert dadurch in Richtung der Wand der Kavität und legt sich an diese an.

Vorzugsweise wird der Unterdruck zwischen der Außenwand der Vorformlings und der Innenwand der Kavität mittels Ansaugen von Luft durch wenigstens eine in der Innenwand der Kavität vorgesehene Öffnung erzeugt. Dies bedeutet, dass der Unterdruck von außen auf den Vorformling wirkt. Vorzugsweise sind selbstverständlich eine Vielzahl von Öffnungen in der Innenwand der Kavität an geeigneten Stellen vorgesehen, um ein möglich perfektes Anliegen der Außenwand des Kunststoffbauteils an der Kontur der Kavität zu gewährleisten.

Der Unterdruck zwischen der Außenwand der Vorformlings und der Innenwand der Kavität kann jedoch alternativ oder zusätzlich durch eine poröse Struktur in der Innenwand der Kavität erzeugt werden. Die Oberfläche der Innenwand der Kavität wird wenigstens in bestimmten Bereichen durch die poröse Struktur gebildet, durch die hindurch der Unterdruck erzeugt wird. Das Absaugen kann jedoch durch jede andere geeignete Struktur bzw. Vorrichtung bewerkstelligt werden.

Der Vorgang des Ansaugens kann optional durch ein Einblasen von Pressluft, wie beim Blasverfahren, in den Innenraum des extrudierten Vorformlings unterstützt werden.

Vorzugsweise erfolgt das Ansaugen im Verfahrensschritt b) durch Vakuum-Ansaugen der Außenwand des Vorformlings an die Innenwand der Kavität.

In einer bevorzugten Ausführungsform der Erfindung erfolgt während des Einbringens des extrudierten Vorformlings in die Kavität im Verfahrensschritt b) ein Einblasen von Druckluft, insbesondere an gekrümmten Abschnitten der Innenwand der Kavität derart, dass der Vorformling mittels der eingeblasenen Luft auf einen definierten Weg innerhalb der Kavität durch diese hindurchgeführt wird. Das Einblasen von Luft zur Führung des extrudierten Schlauchs kann über dieselben oder andere Öffnungen erfolgen, über die im Verfahrensschritt c) der Unterdruck erzeugt wird.

Wie beim Saugblasen kann das Hindurchführen des extrudierten Vorformlings durch die Kavität durch ein Ansaugen desselben unterstützt werden. Das Ansaugen erfolgt am zweiten (unteren) Ende der Kavität. Als Saugvorrichtung könnte prinzipiell dieselbe Pumpe verwendet werden wie für das Ansaugen der Wand des Vorformlings im Verfahrensschritt c).

Insbesondere wird nach dem Verfahrensschritt b) und vor dem Verfahrensschritt c) die Kavität an beiden Enden verschlossen. Der extrudierte Schlauch wird entsprechend abgeschnitten. Durch Quetschkanten des Werkzeugs wird der Bereich außerhalb des Vorformlings vom Bereich innerhalb des Vorformlings getrennt bzw. abgedichtet. Auf diese Weise wird erreicht, dass die Außenwand des Vorformlings durch den Unterdruck an die Innenwand der Kavität gezogen und dort angepresst wird.

Insbesondere umfasst das Verfahren einen weiteren Verfahrensschritt d) in dem das fertige Kunststoffbauteil nach einer Abkühlzeit entformt und aus der Kavität entnommen werden kann.

Eine erfindungsgemäße Vorrichtung zur Herstellung eines Kunststoffbauteils, insbesondere nach dem oben beschriebenen Verfahren, umfasst: ein Formwerkzeug mit einer Formkavität, die von einer Innenwand begrenzt wird, zum Einbringen eines Vorformlings in die Kavität; und eine Einrichtung zur Erzeugung eines Unterdrucks zwischen der Innenwand der Kavität und der Außenwand des Vorformlings.

Die Einrichtung zur Erzeugung eines Unterdrucks kann insbesondere wenigstens eine Öffnung aufweisen, die in der Innenwand der Kavität ausgebildet ist. Vorzugsweise sind mehrere Öffnungen in der Innenwand der Kavität ausgebildet.

Die Innenwand der Kavität kann jedoch auch wenigstens bereichsweise aus einem porösen Material ausgebildet sein. Durch das poröse Material kann Luft aus dem Innenraum der Kavität abgesaugt werden. Insbesondere kann ein Großteil oder die gesamte Innenwand der Kavität aus einem porösen Material bestehen, so dass gleichmäßig Luft abgesaugt werden kann. Es können jedoch auch bereichsweise unterschiedliche poröse Materialien die Kavität abgrenzen.

Die Einrichtung zur Erzeugung eines Unterdrucks kann außerdem ein Leitungssystem und/oder eine Pumpe zur Erzeugung des Unterdrucks zwischen der Innenwand der Kavität und der Außenwand des Vorformlings aufweisen. Die Öffnungen sind verteilt und an geeigneten Stellen ausgebildet. Über das Leitungssystem und die Öffnungen wird mittels der Pumpe Luft abgesaugt, um die Wand des Vorformlings an die Innenwand der Kavität anzusaugen.

Das Pumpsystem ist zur Erzeugung des Unterdrucks insbesondere an die wenigstens eine Öffnung bzw. einen Abschnitt der porösen Innenwand der Kavität angeschlossen.

In einer bevorzugten Ausführungsform der Erfindung weist das Formwerkzeug wenigstens zwei Hälften auf, die zum Entformen des Kunststoffbauteils relativ zueinander bewegbar angeordnet sind. Die Kavität kann jedoch auch durch mehr als zwei Komponenten des Formwerkzeugs begrenzt werden. Je komplexer die Geometrie und damit das Entformen des Kunststoffbauteils ist, desto mehr einzelne Komponenten definieren in der Regel die Kavität.

Insbesondere können die wenigstens zwei Hälften des Formwerkzeugs verschwenkbar und /oder translatorisch zueinander bewegbar angeordnet sein.

In einer bevorzugten Ausführungsform der Erfindung weist die Innenwand der Formkavität eine Struktur auf, die zur gewünschten Außenstruktur des Kunststoffbauteils komplementär ausgebildet ist.

Vorzugsweise weist die Kavität wenigstens eine radiale Vertiefung (relativ zur Längsachse) auf. In der Regel ist die Kavität in der Richtung, in der der Vorformling durch die Kavität geführt wird, relativ lang gestreckt. Eine radiale Vertiefung, die durch die Richtung beim Einbringen des Vorformlings definiert wird, kann beispielsweise zur Ausbildung eines sich radial vom Kunststoffkörper erstreckenden Stutzens vorgesehen sein. Eine radiale Vertiefung bedeutet dabei eine relativ zur Längsachse schräge oder senkrechte Vertiefung.

Vorzugsweise ist in der Wand der Kavität, die die radiale Vertiefung begrenzt, wenigstens eine Öffnung zum Ansaugen der Außenwand des Vorformlings an die Innenwand der Kavität vorgesehen. Insbesondere sind Ansaugvorrichtungen an geeigneten Stellen auch innerhalb der Wand der Vertiefung vorgesehen, um insbesondere dort einen guten Kontakt zwischen der Innenwand der Kavität und dem fertigen Kunststoffbauteil herzustellen.

Ein erfindungsgemäßes Kunststoffbauteil, das insbesondere nach einem der oben beschriebenen Verfahren hergestellt ist, umfasst einen Grundkörper mit einer Längsachse und einem Hohlraum; und wenigstens einen sich radial relativ zur Längsachse erstreckenden Stutzen. Erstreckt sich der Stutzen relativ weit von der Außenwand des Hauptkörpers, so war es mit bisherigen Verfahren schwierig, das Bauteil herzustellen. Diese Probleme werden durch das vorliegende Verfahren gelöst.

Das Kunststoffbauteil ist vorzugsweise einstückig, d.h. einteilig, ausgebildet.

Vorzugsweise ist das Kunststoffbauteil als ein Behälter ausgebildet. Vom Behälter erstreckt sich wenigstens ein Stutzen.

### KURZE BESCHREIBUNG DER FIGUREN

Weitere Merkmale und Vorteile der Erfindung werden aus der folgenden Beschreibung bevorzugter Ausführungsbeispiele anhand der Figuren deutlich. Es zeigen:
- Figur 1a-1e: eine schematische Darstellung der Verfahrensschritte bei der Durchführung des erfindungsgemäßen Verfahrens;
- Figur 2: eine schematische Darstellung eines erfindungsgemäßen Formwerkzeugs; und
- Figur 3: ein Beispiel für ein erfindungsgemäßes Kunststoffbauteil.

### BESCHREIBUNG BEVORZUGTER AUSFÜHRUNGSBEISPIELE

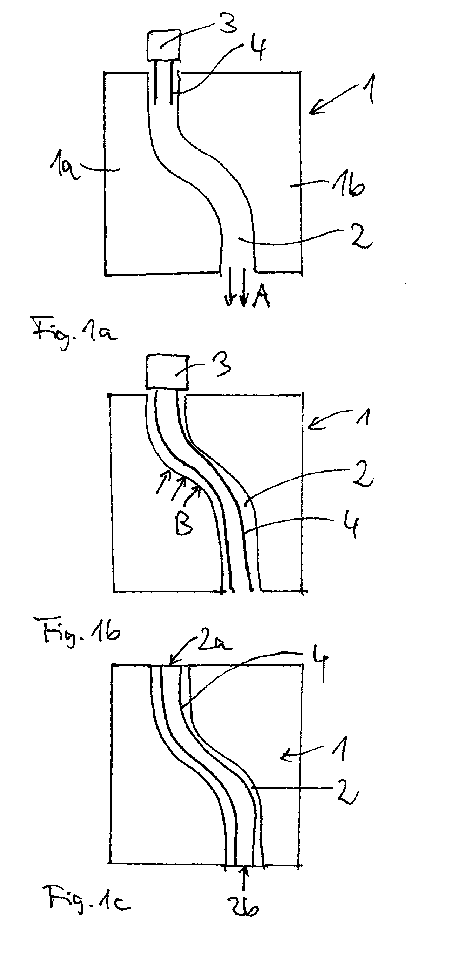

Die Figur 1a zeigt ein erfindungsgemäßes Formwerkzeug 1, das aus zwei Halbschalen 1a und 1b zusammengesetzt ist. Die Trennfläche zwischen den Halbschalen 1a und 1b verläuft durch eine Kavität 2, die sich von der Oberseite zur Unterseite des Formwerkzeugs 1 erstreckt. Die Kavität 2 ist in Form eines gekrümmten Hohlraums ausgeführt, der einen kurvenartigen Verlauf aufweist.

Mittels eines Extruders 3 wird ein Kunststoffschlauch 4 (Vorformling) extrudiert, dessen Radius kleiner ist als der Radius der Kavität 2, und durch die Kavität 2 nach unten geführt. Das Hindurchführen des Kunststoffschlauchs 4 wird durch ein Ansaugen, angedeutet durch die Pfeile A, unterstützt.

Wie in der Figur 1b durch die Pfeile B angedeutet, kann während des Durchführens des Vorformlings 4 durch die Kavität 2 an geeigneten Stellen Druckluft in die Kavität 2 geleitet werden um die Richtung bzw. Lage des Vorformlings 4 beim Durchtritt durch die Kavität 2 in geeigneter Weise zu beeinflussen. Die Druckluft B kann beispielsweise durch Öffnungen in der Innenwand der Kavität 2 eingebracht werden. Die Öffnungen sind im Bereich einer Biegung angeordnet. Auf diese Weise können Krümmungen in der Kavität 2 ohne eine Berührung oder ein Anhaften des Vorformlings 4 an den Innenwänden der Kavität 2 überwunden werden.

Nachdem der Kunststoffschlauch 4 in die Kavität 2 vollständig eingebracht ist, werden die beiden Enden 2a und 2b der Kavität 2, wie in der Figur 1c dargestellt, verschlossen.

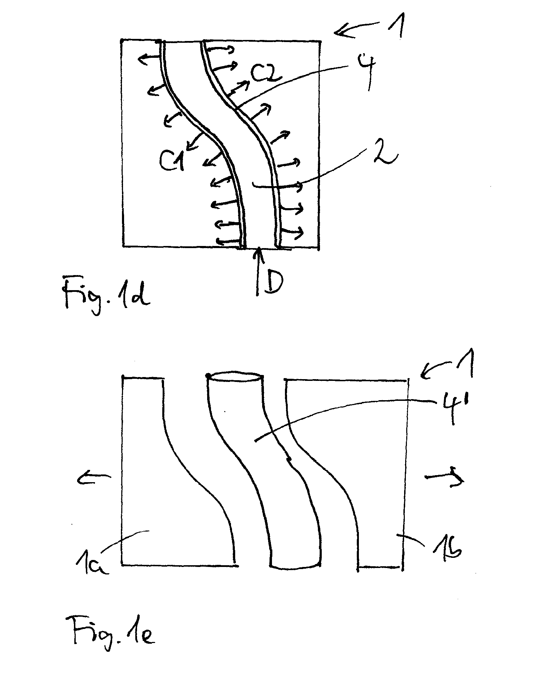

Anschließend wird, wie in der Figur 1d gezeigt, der extrudierte Kunststoffschlauch 4 durch Erzeugung eines Unterdrucks / Vakuums zwischen der Außenseite des Kunststoffschlauchs 4 und der Innenwand der Kavität 2 an die Innenwand der Kavität 2 herangezogen. Der Vorformling 4 dehnt sich dabei nach außen aus, bis er in Kontakt mit der Innenwand der Kavität 2 tritt. Das erzeugte Produkt nimmt dabei die komplementäre Kontur der Innenwand der Kavität 2 an.

Durch das Ansaugen wird ein gutes Anliegen des extrudierten Materials an der Innenwand der Kavität erreicht, auch an geometrisch schwierigen Stellen wie Vertiefungen. Darüber hinaus kann die Dynamik des Ansaugens durch die Lage der Ansaugöffnungen sowie die Ansaugleistung durch die einzelnen Öffnungen gesteuert werden.

Der Unterdruck wird, wie durch die Pfeile C1 und C2 angedeutet, durch Öffnungen in der Innenwand der Kavität 2 erzeugt. Die Öffnungen sind dabei an geeigneter Stelle in der Wand angeordnet.

Zusätzlich kann, allerdings rein optional, wie im Saugblasverfahren das Ansaugen des extrudierten Schlauchs 4 an die Innenwände der Kavität 2 durch das Einbringen von Druckluft, angedeutet durch den Pfeil D, in den Innenbereich des extrudierten Vorformlings 4 unterstützt werden.

Wie in Figur 1e dargestellt, wird nach einer bestimmten Abkühlzeit das Endprodukt 4', beispielsweise ein Rohr, durch Auseinanderbringen der Formhälften 1a und 1b entformt und entnommen.

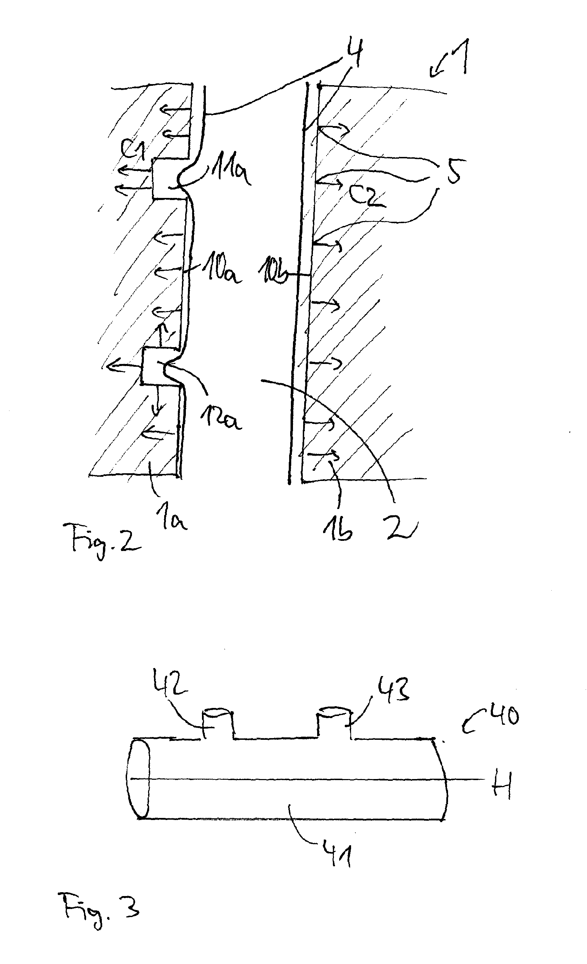

In der Figur 2 ist ein weiteres Ausführungsbeispiel eines erfindungsgemäßen Formwerkzeugs 1 ausschnittsweise dargestellt.

Das Formwerkzeug 1 weist Formhälften 1a und 1b auf, deren Wandbereiche 10a bzw. 10b eine Kavität 2 definieren. In diesem Ausführungsbeispiel weist die Kavität 2 zwar keine Krümmungen auf. Allerdings sind in der Formhälfte 1a seitlich zylindrische Vertiefungen 11a und 12a vorgesehen, um ein hohles Bauteil mit seitlich sich erstreckenden Stutzen herzustellen.

Wie durch die Pfeile C1 und die Pfeile C2 in der ersten bzw. in der zweiten Formhälfte 1a bzw. 1b angedeutet, wird ein extrudierter Vorformling 4, der durch die Kavität 2 hindurch geführt worden ist, über Öffnungen 5 an geeigneten Stellen der Innenwände 10a, 10b der Werkzeugs 1 zu den Wandbereichen 10a und 10b gesaugt, um sich an diese anzulegen. Wie dargestellt, können Öffnungen auch in den Vertiefungen 11a, 12a vorgesehen sein. Dadurch wird der extrudierte Schlauch 4 auch in die Vertiefungen 11a und 12a gesaugt, um jeweils einen Stutzen bzw. eine seitliche Verformung im hergestellten Bauteil auszubilden.

Mit Hilfe der Erfindung können mit hoher Qualität und Präzision Geometrien realisiert werden, die im herkömmlichen Saugblasverfahren nicht oder nur schwer hergestellt werden konnten.

Einen derartigen geometrischen Gegenstand 40 zeigt die Figur 3. Der Gegenstand 40 weist einen hohlen, etwa rohrförmigen Hauptkörper 41 und sich seitlich bezüglich der Hauptachse H erstreckende, zylindrische Stutzen 42 und 43 auf. Insbesondere der Bereich der Stutzen kann durch das erfindungsgemäße Ansaugen in ausreichender Qualität und Zuverlässigkeit mit hoher Präzision hergestellt werden.

## Patentansprüche

1. Verfahren zur Herstellung eines Kunststoffbauteils (40), umfassend die Schritte:
a) Bereitstellen eines Formwerkzeugs (1) mit einer Kavität (2); b) Einbringen eines Vorformlings (4) in die Kavität; und c) Ansaugen der Außenwand des Vorformlings (4) an die Innenwand der Kavität (2) durch Erzeugen eines Unterdrucks zwischen der Außenwand des Vorformlings (4) und der Innenwand der Kavität (2).

2. Verfahren nach Anspruch 1, **dadurch gekennzeichnet, dass**
der Unterdruck zwischen der Außenwand der Vorformlings (4) und der Innenwand der Kavität (2) mittels Ansaugen von Luft durch wenigstens eine in der Innenwand der Kavität (2) ausgebildete Öffnung (5) erzeugt wird.

3. Verfahren nach Anspruch 1 oder 2, **dadurch gekennzeichnet, dass**
der Unterdruck zwischen der Außenwand der Vorformlings (4) und der Innenwand der Kavität (2) durch eine poröse Struktur in der Innenwand der Kavität (2) erzeugt wird.

4. Verfahren nach einem der vorhergehenden Ansprüche, **dadurch gekennzeichnet,**
**dass**
das Ansaugen im Verfahrensschritt b) durch Vakuum-Ansaugen der Außenwand des Vorformlings an die Innenwand der Kavität erfolgt.

5. Verfahren nach einem der vorhergehenden Ansprüche, **dadurch gekennzeichnet,**
**dass**
während des Einbringens des Vorformlings (4) in die Kavität im Verfahrensschritt b)
ein Einblasen von Druckluft, insbesondere an gekrümmten Abschnitten der Innenwand der Kavität (2) derart erfolgt, dass der Vorformling (4) mittels der eingeblasenen Luft auf einen definierten Weg innerhalb der Kavität durch diese hindurchgeführt wird.

6. Verfahren nach einem der vorhergehenden Ansprüche, **dadurch gekennzeichnet,**
**dass**
die Kavität (2) nach dem Verfahrensschritt b) und vor dem Verfahrensschritt c) an beiden Enden verschlossen wird.

7. Verfahren nach einem der vorhergehenden Ansprüche, **dadurch gekennzeichnet,**
**dass**
das Verfahren einen weiteren Verfahrensschritt d) umfasst, in dem das fertige Kunststoffbauteil (4', 40) nach einer Abkühlzeit entformt und aus der Kavität entnommen wird.

8. Vorrichtung zur Herstellung eines Kunststoffbauteils, insbesondere nach einem Verfahren gemäß den Ansprüchen 1 bis 7, umfassend:
ein Formwerkzeug (1) mit einer Formkavität (2), die von einer Innenwand (10a, 10b) begrenzt wird, zum Einbringen eines Vorformlings (4) in die Kavität (2); und
eine Einrichtung zur Erzeugung eines Unterdrucks zwischen der Innenwand (10a, 10b) der Kavität und der Außenwand des Vorformlings (4).

9. Vorrichtung nach Anspruch 8, **dadurch gekennzeichnet, dass**
die Einrichtung zur Erzeugung eines Unterdrucks wenigstens eine Öffnung (5) aufweist, die in der Innenwand (10a, 10b) der Formkavität (2) ausgebildet ist.

10. Vorrichtung nach Anspruch 8 oder 9, **dadurch gekennzeichnet, dass**
die Innenwand der Kavität (2) wenigstens bereichsweise aus einem porösen Material ausgebildet ist.

11. Vorrichtung nach Anspruch 8, 9 oder 10, **dadurch gekennzeichnet, dass**
die Einrichtung zur Erzeugung eines Unterdrucks ein Leitungssystem und/oder ein Pumpsystem zur Erzeugung des Unterdrucks zwischen der Innenwand (10a, 10b) der Kavität (2) und der Außenwand des Vorformlings (4) aufweist.

12. Vorrichtung nach einem der Ansprüche 8 bis 11, **dadurch gekennzeichnet, dass**
die Formkavität (2) wenigstens eine radiale Vertiefung (11a, 12a) aufweist.

13. Vorrichtung nach Anspruch 12, **dadurch gekennzeichnet, dass**
in der die radiale Vertiefung (11a, 12a) begrenzenden Wand wenigstens eine Öffnung (5) zum Ansaugen der Außenwand des Vorformlings an die Innenwand der Formkavität (2) ausgebildet ist.

14. Kunststoffbauteil (40), insbesondere hergestellt nach einem Verfahren gemäß den Ansprüchen 1 bis 7, umfassend:
einen Grundkörper (41) mit einer Längsachse (H) und mit einem Hohlraum; und
wenigstens einen sich radial relativ zur Längsachse (H) erstreckenden Stutzen (42,43).

15. Kunststoffbauteil (40) nach Anspruch 14, **dadurch gekennzeichnet, dass**
das Kunststoffbauteil (40) einstückig bzw. einteilig ausgebildet ist.
